# EUROPEAN PATENT APPLICATION

(11) **EP 2 154 182 A1**
(43) Date of publication of application: **17.02.2010**
(21) Application number: 08161999.1
(22) Date of filing: 07.08.2008
(51) Int. Cl.: C08J 7/04, C08J 7/16

(54) **Process for the surface modification of a polyester substrate, such surface-modified substrate and its uses**

(71) Applicant: TECHNISCHE UNIVERSITEIT EINDHOVEN, 5600 MB Eindhoven (NL)
(72) Inventor: Sijbesma, Rintje Pieter, 5212 AS s'Hertogenbosch (NL); Botterhuis, Nicole Ellen, 5616 BK Eindhoven (NL); Michels, Jasper Joost, 5211 LD s'Hertogenbosch (NL); Péter, Mária, 5658 GE Eindhoven (NL)
(74) Representative: Oberlein, Gerriet H. R.

(57) **Abstract**

**Summary:**

A process is provided to covalently bind an amine-terminated polyamine to at least a part of the surface of a polyester substrate via an amidation reaction comprising the steps of
a) providing a polyester substrate,
b) providing an amine-terminated polyamine,
c) coating the amine-terminated polyamine onto at least a part of the surface of the polyester substrate to result in a coated substrate,
d) heating the coated substrate of step c) at a temperature T ranging from room temperature up to 130 °C for a reaction time ranging from 10 seconds up to 18 hours,
e) removing physisorbed amine-terminated polyamine and
f) drying.

Furthermore, a polyester substrate comprising on at least a part of its surface an amine-terminated polyamine, which is covalently bound to the substrate via an amide bond, is provided and uses of said inventive substrate are described.

## Description

The present invention pertains to a process for the surface modification of a polyester substrate, such surface-modified substrate and its uses.

Polyester substrates like poly(ethylene terephthalate) substrates and poly(ethylene naphthalate) substrates, especially in the shape of a film, are known to form versatile substrates for applications in polymer electronics. For example, film-shaped substrates comprising poly(ethylene naphthalate) are strong and flexible, optically clear, thermally stable up to 200 °C, resistant to many solvents and exhibit dielectric and barrier properties.

However, polyester substrates like poly(ethylene terephthalate) and poly(ethylene naphthalate) substrates suffer from a low adhesion of their surfaces e.g. to metals. To overcome this disadvantage several attempts were described in the prior art. For example the polyester substrates were subjected to an oxygen plasma treatment. But such a treatment is time consuming and quite aggressive, thereby leading to roughening of the substrate surface. Metal patterns that are formed on such oxygen plasma treated polyester films turned out to be not suitable for electric wiring.

Therefore, the problem of the present invention is to provide a process for the surface modification of a polyester substrate, which eliminates the disadvantages described above.

Said problem is solved by a process to covalently bind an amine-terminated polyamine to at least a part of the surface of a polyester substrate via an amidation reaction comprising the steps of
a) providing a polyester substrate,
b) providing an amine-terminated polyamine,
c) coating the amine-terminated polyamine onto at least a part of the surface of the polyester substrate to result in a coated substrate,
d) heating the coated substrate of step c) at a temperature T ranging from room temperature up to 130 °C for a reaction time ranging from 10 seconds up to 18 hours,
e) removing physisorbed amine-terminated polyamine and
f) drying.

Surprisingly the inventive process - despite of its simplicity - causes amidation, i.e. the formation of covalent amide bonds between ester groups of the polyester substrate surface and terminal amine groups of the amine-terminated polyamine. This was experimentally proven by contact angle measurements, x-ray photon spectroscopy (XPS) and Fourier-transformed infrared reflection-absorption spectroscopy (FT-IRRAS). Therefore, the inventive process provides a polyester substrate surface, which is modified with an amine-terminated polyamine in the most stable manner, i.e. by covalent chemical bonds. Furthermore, the inventive process does not lead to roughening of the polyester substrate surface.

In step a) of the inventive process a polyester substrate is provided. This essentially means, that at least that surface of the substrate which is intended to be modified is cleaned by removing impurities on said surface e.g. by a suitable solvent treatment such as rinsing with an aliphatic alcohol, e.g. isopropanol, for a sufficient time, e.g. over night, followed by drying said cleaned surface under a stream of an inert gas like nitrogen and placing the dried surface in a vacuum oven for a certain time and temperature, e.g. at 40 °C for 2 hours.

In step b) of the inventive process an amine-terminated polyamine, preferably an amine-terminated poly(propylene imine) dendrimer, e.g. a third generation poly(propylene imine) dendrimer supplied from SyMO-Chem B.V., Eindhoven, is provided. This essentially means, that said amine-terminated polyamine is dissolved in a suitable solvent, e.g. in an aliphatic alcohol like ethanol in a concentration which is suited for the following coating in step c) of the inventive process, e.g. in a concentration of 10 mg/ml.

In step c) of the inventive process coating of the amine-terminated polyamine onto at least a part of the surface of the polyester substrate is performed. Within the scope of the present invention the term "coating" means any method which is capable to bring the amine-terminated polyamine into physical contact with the surface of the polyester substrate. A preferred method is for example spin coating, e.g. at a speed of 1500 rpm for 2 minutes. Another preferred method is to apply the amine-terminated polyamine to an elastic or to a rigid stamp and stamping the polyester substrate. Another preferred embodiment is to apply the amine-terminated polyamine by inject-, grave- or flexo-printing. Before the coating the surface to be coated might be prewetted, preferably with an aliphatic alcohol, e.g. with ethanol. Within the scope of the present invention the term "coating of the amine-terminated polyamine onto at least a part of the surface of the polyester substrate" means, that
- either one surface or all surfaces of the substrate are completely brought into physical contact with the amine-terminated polyamine
- or at least a part of one surface is brought into physical contact with the amine-terminated polyamine, wherein that part of the surface being in physical contact with the amine-terminated polyamine preferably can form any desired pattern, e.g. lines.

In step d) of the inventive process heating the coated substrate of step c) at a temperature T ranging from room temperature, i.e. from 20 to 25 °C, up to 130 °C for a reaction time ranging from 10 seconds up to 18 hours is performed. In a preferred embodiment of the inventive process said heating is performed at a temperature T ranging from 40 °C up to 90 °C, even more preferred form 50 °C up to 80 °C and most preferred at a temperature T of 60 °C, for a reaction time ranging from 10 minutes up to 18 hours. Said ranges of temperature and reaction time surprisingly cause amidation, i.e. the formation of covalent amide bonds between ester groups of the polyester substrate surface and terminal amine groups of the amine-terminated polyamine, wherein the terminal amine groups preferably are primary amines. During the said heating the polyester substrate coated with the amine-terminated polyamine is placed at a heating plate having the chosen temperature T or kept at room temperature and covered with a Petri dish. This again demonstrates the simplicity of the inventive process.

In step e) of the inventive process physisorbed amine-terminated polyamine is removed e.g. by a treatment with an aliphatic alcohol and water. For example for this purpose the substrate still comprising physisorbed amine-terminated polyamine is rinsed twice with ethanol and water and placed in an ethanol bath for 2 hours.

In step f) of the inventive process drying is performed, preferably under a stream of an inert gas, e.g. under a nitrogen stream.

During the steps d) to f) of the inventive process the terminal amine groups of the amine-terminated polyamine may react with CO₂ from the atmosphere. Therefore, in a preferred embodiment of the inventive process steps d) to f) are performed in a CO₂-free atmosphere.

In a preferred embodiment of the inventive process the polyester substrate is a poly(ethylene terephthalate) substrate or a poly(ethylene naphthalate) substrate.

In a further preferred embodiment of the inventive process the amine-terminated polyamine is an amine-terminated poly(propylene imine) dendrimer, especially preferred a third generation amine-terminated poly(propylene imine) dendrimer exhibiting 16 primary amino groups, which terminate the branches of said dendrimer. Such a dendrimer is supplied from SyMO-Chem B.V., Eindhoven.

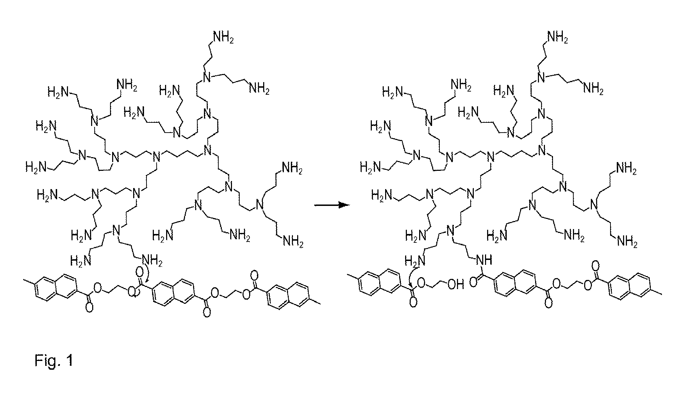

Fig. 1 shows such a third generation amine-terminated poly(propylene imine) dendrimer and its amidation reaction with a poly(ethylene naphthalate) substrate resulting in amide bonds, which covalently bind said third generation amine-terminated poly(propylene imine) dendrimer to said poly(ethylene naphthalate) substrate.

In a further preferred embodiment of the inventive process the polyester substrate exhibits the shape of a film. For example a poly(ethylene naphthalate) film can be obtained under the trade name Teonex^{®} Q 65, 100 µm thick, from Dupont Teijin.

Furthermore, a polyester substrate comprising on at least a part of its surface an amine-terminated polyamine, which is covalently bound to the substrate via an amide bond, is also part of the present invention and can be obtained from the inventive process.

In a preferred embodiment of the inventive polyester substrate the polyester substrate is a poly(ethylene terephthalate) substrate or a poly(ethylene naphthalate) substrate.

In another preferred embodiment of the inventive polyester substrate the amine-terminated polyamine, which is covalently bound to the substrate via an amide bond, is an amine-terminated poly(propylene imine) dendrimer, especially preferred a third generation amine-terminated poly(propylene imine) dendrimer exhibiting 16 primary amino groups, which terminate the branches of said dendrimer.

In a further preferred embodiment of the inventive polyester substrate the substrate exhibits the shape of a film.

Because of the stability of the covalent amide bond between the polyester and the amine-terminated polyamine and because of the high chemical reactivity of the terminal amino groups of the amine-terminated polyamine - especially of the terminal primary amino groups of the dendrimer - the inventive polyester substrate can be used for a manifold of further reactions via said primary amino groups. If some of the terminal amino groups of the amine-terminated polyamine have reacted with CO₂ from the atmosphere during storage of the inventive polyester substrate, it is preferred, that before the use of the inventive polyester substrate for further processes the inventive polyester substrate is rinsed with 0.1 N HCl for 15 minutes to remove any carbamate and to have all terminal amino groups of the amine-terminated polyamine available for said use.

If for example the inventive polyester substrate exhibits the shape of a film and the amine-terminated polyamine is amide-bound to the film surface in the shape of a pattern, e.g. by printing, such a substrate can be used
- to enhance the resolution of inkjet printing via selective adherence of the ink or
- to selectively attach acids like polyacrylic acid molecules or desoxyribonucleic acid (DNA) molecules or proteins via covalent binding or electrostatic interactions to the polyester film for biosensor applications or
- for binding nano-sized particles like silica particles or gold particles or
- to orientate protein fibers, carbon nanotubes or DNA molecules by binding them in the direction of the line-pattern or
- to obtain conductive polymer wires by using rigid stamps for the microprinting and filling the resulting trenches with polystyrene sulfonate (PPS) and poly(3,4-ethylenedioxy-thiophene) (PEDOT) and
- for electroless deposition of one or more metals, e.g. of copper, zinc and nickel, along said pattern.

The use of the inventive polyester substrate to bind metal ions to the amine groups of the amine-terminated polyamine to yield a catalyst for electroless plating is also part of the present invention.

If a polyester substrate according to the present invention, e.g. a poly(ethylene naphthalate film), comprises over the whole of one of its surfaces an amine-terminated polyamine, e.g. a third generation amine-terminated poly(propylene imine) dendrimer, which is covalently bound to said surface via an amide bond, electroless plating on said surface of the substrate or film yields a metal layer, e.g. a copper, zinc or nickel layer, which does not detach in peeling tests.

If a polyester substrate according to the present invention, e.g. a poly(ethylene naphthalate film), comprises over one of its surfaces a pattern of an amine-terminated polyamine, e.g. of a third generation amine-terminated poly(propylene imine) dendrimer, which is covalently bound to said surface via an amide bond, electroless plating on said surface of the substrate or film yields a metal pattern, e.g. a copper, zinc or nickel pattern, which does not detach in peeling tests.

## Claims

1. Process to covalently bind an amine-terminated polyamine to at least a part of the surface of a polyester substrate via an amidation reaction comprising the steps of
a) providing a polyester substrate,
b) providing an amine-terminated polyamine,
c) coating the amine-terminated polyamine onto at least a part of the surface of the polyester substrate to result in a coated substrate,
d) heating the coated substrate of step c) at a temperature T ranging from room temperature up to 130 °C for a reaction time ranging from 10 seconds up to 18 hours,
e) removing physisorbed amine-terminated polyamine and
f) drying

2. Process according to claim 1, wherein the polyester substrate is a poly(ethylene terephthalate) substrate or a poly(ethylene naphthalate) substrate.

3. Process according to claims 1 or 2, wherein the amine-terminated polyamine is an amine-terminated poly(propylene imine) dendrimer.

4. Process according to one or more of claims 1 to 3, wherein the polyester substrate exhibits the shape of a film.

5. Polyester substrate comprising on at least a part of its surface an amine-terminated polyamine, which is covalently bound to the substrate via an amide bond.

6. Polyester substrate according to claim 5, wherein the polyester substrate is a poly(ethylene terephthalate) substrate or a poly(ethylene naphthalate) substrate.

7. Polyester substrate according to claim 5 or 6, wherein the amine-terminated polyamine is an amine-terminated poly(propylene imine) dendrimer.

8. Polyester substrate according to one or more of claims 5 to 7, wherein the substrate exhibits the shape of a film.

9. Use of the polyester substrate according to one or more of claims 5 to 8 to bind metal ions to the amine groups of the amine-terminated polyamine to yield a catalyst for electroless plating.
